Europäisches Patentamt

European Patent Office

Office européen des brevets

(11) Veröffentlichungsnummer: **0 160 887**
**B1**

(12) **EUROPÄISCHE PATENTSCHRIFT**

(45) Veröffentlichungstag der Patentschrift: 08.08.90

(21) Anmeldenummer: 85104985.8

(22) Anmeldetag: 24.04.85

(51) Int. Cl.⁵: **H 02 K 9/12, H 02 K 9/00**

(54) **Einrichtung zur forcierten Rotorwicklungs-Gaskühlung dynamoelektrischer Maschinen, insbesondere von Turbogeneratoren.**

(30) Priorität: 08.05.84 DE 3416943

(43) Veröffentlichungstag der Anmeldung:
13.11.85 Patentblatt 85/46

(45) Bekanntmachung des Hinweises auf die
Patenterteilung:
08.08.90 Patentblatt 90/32

(84) Benannte Vertragsstaaten:
AT CH DE FR GB LI

(56) Entgegenhaltungen:
DE-C- 274 467
US-A-2 459 586
US-A-3 322 985

(73) Patentinhaber: Siemens Aktiengesellschaft
Wittelsbacherplatz 2
D-8000 München 2 (DE)

(72) Erfinder: Pannen, Egon, Dr. Dipl.-Ing.
Rathenaustrasse 7
D-4330 Mülheim/Ruhr (DE)

Courier Press, Leamington Spa, England.

## Beschreibung

Die Erfindung bezieht sich auf eine Einrichtung zur forcierten Gaskühlung der Rotorwicklungen dynamoelektrischer Maschinen, insbesondere von Turbogeneratoren, gemäß Oberbegriff des Anspruchs 1.

Bie bekannten Einrichtung zur Gaskühlung der Rotorwicklungen von Turbogeneratoren der genannten Art wird zwar die Rotorwicklung in ihrem aktiven Teil (Nutbereich sehr intensiv gekühlt. Jedoch werden im Vergleich dazu die in den Wickelkopfräumen entstehenden elektrischen Verlustleistungen nach der Methode de Thermosyphonkühlung abgeführt (siehe dazu Wissentschaftliche Berichte AEG-Telefunken 41 (1968) Heft 4, Seiten 161 bis 167, insbesondere Seite 161). Die Wirksamkeit dieser Kühlmethode ist in der Regel indessen geringer als die Kühlmethode im aktiven Teil, so daß der wärmste Punkte der Wicklung im Wickelkopfbereich liegt. Die Erwärmung des Wickelkopfes begrenzt mithin eine höhere Ausnutzung des Läufers oder eine Leistungssteigerung des Turbogenerator bzw. allgemein der dynamoelektrischen Maschine. Das Problem besteht nun darin, eine verbesserte Kühlung für die Wickelköpfe zu finden, die sowohl im Wickelkopfbereich als auch im aktiven Teil eine möglichst niedrige und gleichmäßige Übertemperatur erreicht. Erst dann könnte die gewünschte Leistungssteigerung oder höhere Ausnutzung erzielt werden.

Der Erfindung liegt die Aufgabe zugrunde, eine gattungsgemäße Einrichtung zur forcierten Gaskühlung der Rotorwicklungen dynamoelektrischer Maschinen, insbesondere von Turbogeneratoren, zu schaffen, bei der die Intensität der Wickelkopfkühlung an diejenige der direkten leiterkühlung im Ballenteil angeglichen werden kann, oder mit anderen Worten: Es soll die Wickelkopfgaskühlung so intensiviert sein, daß die durch die Kühlungsart (Luftkühlung, $H_2$-Kühlung) ger gasgekühlten Maschinen gegebenen Leistungsgrenzen nach oben erweitert werden können, weil die Wickelkopf-Übertemperatur nicht mehr die entscheidende Größe ist.

Erfindungsgemäß wird die gestellte Aufgabe bei einer Einrichtung gemäß Oberbegriff des Anspruchs 1 durch die im Kennzeichen des Anspruchs 1 angegebenen Merkmale gelöst. Vorteilhafte Weiterbildungen sind in den Unteransprüchen 2 und 3 angegeben.

Zwar ist aus US—A—2 322 985 eine ähnliche Einrichtung zur Gaskühlung der Rotorwicklungen zu entnehmen, die sowohl tangential als auch axial verlaufende Wickelkopf-Kühlkanäle aufweist. Jedoch sind diese Kanäle nicht wellenförmig, sondern laufen in Spiralform um die Leiter herum und sind deshalb unnötig lang und die Kühlung wird deshalb nicht besonders effektiv. Auch weist diese Einrichtung keinen Isolierstoff-Zylinder auf, weshalb die Kanalkonstruktion kompliziert wird und Bohrungen in den Füllstücken vorhanden sein müssen.

Die mit der Erfindung erzielbaren Vorteile sind vor allem in der Intensivierung der Wickelkopfkühlung zu sehen; diese kann man als Vierflut-Kühlung bezeichnen, weil sowohl die axialen als auch die peripheren Spulenseiten des Wickelkopfes ihre eigenen Kühlgasströme haben, und diese an beiden Maschinenenden Die neue Einrichtung läßt sich unschwer in Bezug auf den Kühleffekt an den Wickelköpfen optimieren: Die Spalten zwischen den Füllstücken und der Wickelkopfoberfläche können so gestaltet werden, daß die Übertemperatur am niedrigsten wird, D.h. es kann ein Kompromiß gefunden werden zwischen möglichst kleinen Spalten und größeren Spalten. Im erstgenannten Fall folgt aus der relativ hohen Kühlmittelgeschwindigkeit eine hohe Wärmeübergangszahl und eine kleine Temperaturdifferenz zwischen Wicklung und Kühlmittel; damit ist jedoch auch ein relativ großen Druckabfall verbunden, was wiederum zur Reduzierung der Kühlmittelmenge und zu einer höheren Kühlmittelaufwärmung führt. Im zweitgenannten Fall bei größeren Spalten ergibt sich eine kleinere Wärmeübergangszahl und daraus eine höhere Temperaturdifferenz zwischen der Wicklung und dem Kühlmittel, aber zugleich eine geringere Kühlmittelaufwärmung.

Im folgenden wird anhand der Zeichnung, in der ein Ausführungsbeispiel der Erfindung dargestellt wird, diese noch näher erläutert. Darin zeigen:

Fig. 1 perspektivisch im Ausschnitt die Rotorpartie eines Turbogenerators mit der Einrichtung zur forcierten Wickelkopf-Gaskühlung nach der Erfindung;

Figur 2 ein Querschnittsdetail des Rotorballens mit zwei Rotorwicklungsleiteranordnungen und

Fig. 3 ein Diagramm, in dem vergleichsweise die Übertemperaturen der Wicklung zwischen gerechneten Werten und den an einem Läufermodell gemessenen Werten eingetragen sind, und zwar über einer axialen Teillänge von Wickelkopfmitte bis Ballenmitte gesehen (Abszissenachse). Details ergeben sich aus der Legende der Fig. 3.

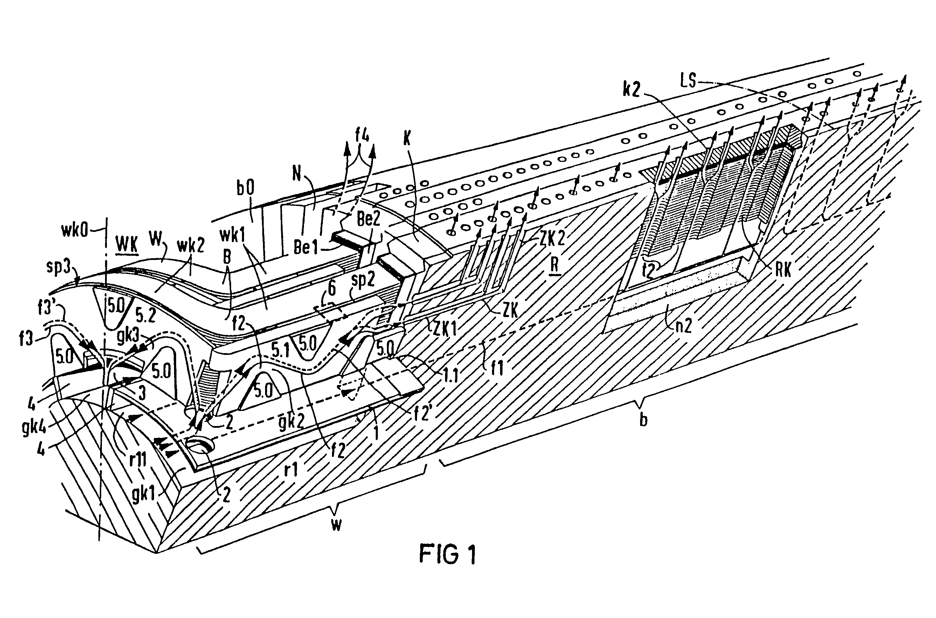

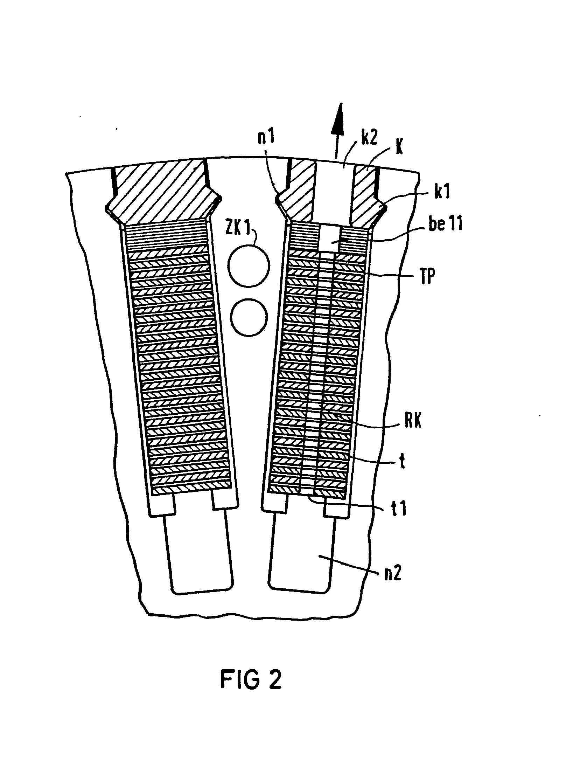

Wie Fig. 1 zeigt, sind in dem aus magnetischem Stahl bestehenden Rotor R Nuten N zu Einlegen der Spulenwindungen W der Rotorwicklung eingefräßt. Die Spulenwindungen W erstrecken sich innerhalb der Nuten N des Ballenbereiches b axial-radial; im Wickelkopfbereich WK erstrecken sich die Windungen W zunächst auch axial-radial und sind dann an den Biegestellen B so abgebogen, daß sie peripher längs Umfangslinien verlaufen. Diese peripher verlaufenden Spulenpartien werden dann zum Einfügen in weitere Nuten N wiederum in die Axiale umgebogen (nicht dargestellt). Jede der einzelnen Spulenwindungen W besteht somit aus einem Teilleiterpaket TP, welches in Fig. 2 im Schnitt und Fig. 1 im Ballenbereich b im teilweise weggebrochenen Zustand dargestellt ist. In ihrer in die Nut N eingelegten Lage werden die Teilleiterpakete TP durch oberseitige Isolierstoff-Beilagen Bel, durch seitliche Isolierstoffbeilagen Be2 und durch Nutverschlußteile K abgesichert, welche entsprechende Rücksprünge n1 der Nutflanken mit keilförmigen Vorsprüngen k1 hintergreifen. Die einzelnen flachen, im Querschnitt rechteckförmigen Teilleiter t sind in ihrrem Teilleiterpaket bzw. Stapel gegeneinander isoliert und über die Ballenlänger gesehen gleichmäßig verteilt mit Radialbohrungen t1 versehen, welche mit einem Nutengrundkanal n2 kommunizieren, letzterer erstreckt sich über die axiale Ballenlänge b derart, daß die Kühlgasströmung für die direkte Rotorleiterkühlung, wie es Pfeil f1 andeutet, vom Nutengrund her durch die Kühlgasbohrungen t1 der Teilleiter t radial nach außen, und zwar durch entsprechende Öffnungen be11 der oberseitigen Nutbeilagen und durch Öffnungen k2 in den Nutverschlußkeilen K in den Luftspaltraum LS strömen kann. Aus dem Luftspaltraum LS wird das aufgewärmte Kühlgas (bei einer luftgekühlten Maschine also die aufgewärmte Kühlluft) über nicht dargestellt Ventilatoren an einem oder an beiden Maschinenenden abgesaugt, ebenso wie durch diese Ventilatoren das Kühlgas von den beiden Stirnseiten des Rotors her in die Rotorkühlkanäle hineingedrückt wird. Zur indirekten Rotorkühlung sind weiterhin Zahnkanäle ZK vorgesehen mit axial verlaufenden Kanalabschnitten zk1 und radial davon abzweigenden Kanalabschnitten zk2, wobei aus letzteren die Kühlluft ebenfalls radial in den Luftspaltraum LS übertreten kann. Die durch Bohrungen t1 in den Rotorwicklungsleitern sich ergebenden Radialkanäle RK ebenso wie die Radialkanäle zk2 könnten auch schräg-radial verlaufen, was jedoch einen höheren Fertigungaufwand bedeutet.

Erfindungsgemäß ist nun der als Ganzes mit WK bezeichnete Wickelkopf an seinem inneren Umfang durch einen Isolierstoff-Zylinder 1 abgedeckt. Dieser Isolierstoff-Zylinder 1, von dem in Fig. 1 nur ein Bogenstück erkennbar ist, weist nun im Bereich des Überganges von den axial verlaufenden Spulenlängsseiten wk1 zu den peripher verlaufenden Spulenstirnseiten wk2 des Wickelkopfes WK (Biegungsbereiche B) jeweils Kühlgas-Eintrittsöffnunge 2 auf.

Der Ringspalt zwischen dem Innenumfang des Wickelkopfes WK, der ja durch den Isolierstoff-Zylinder 1 abgedeckt ist, und dem Außenumfang r11 des Rotorwellenzapfens r1 ist mit gk1 bezeichnet. dieser Ringspalt ist zugleich der Gas-Strömungsraum im Wickelkopfbereich w. Die Halterung des Isolierstoff-zylinders 1 erfolgt an seinem ballenseitigen Ende durch Einfügung in eine Ringnut 1.1; im übrigen stützt sich der Zylinder 1 an der Innenseite der Füllstücke 5.1, 5.2 ab. welche wiederum ebenso wie die Spulenwindungen W des Wickelkopfes WK am Innenumfang der nicht dargestellten Wickelkopfkappe fliehkraftsicher gehalten werden.

Die Eintrittsöffnungen 2 sind in ihrem Durchmesser bzw. in ihrer Weite so groß, daß sie mit Wickelkopfkühlkanälen gk2 von Tangential-Räumen sp2 als auch mit Wickelkopf-Kühlkanälen gk3 von Axial-Spalt-Räumen sp3 kommunizieren. Erstere Räume sp2 werden gebildet und begrenzt zwischen den einander benachbarten, axial verlaufenden Spulenlängsseiten wk1, letztere Räume sp3 werden gebildet und begrenzt zwischen den einander benachbarten, peripher verlaufenden Spulenstirnseiten wk2 des Wickelkopfes WK.

Unter Freilassung der Wickelkopf-Kühlkanäle gk2 und gk3 sind nun in die Tangentialspalt-Räume sp2 und in die Axialspalt-Räume sp3 die schon erwähnten Tangentialspalt-Füllstücke 5.1 und die Axialspalt-Füllstücke 5.2 eingefügt, welche beidseits mit Stützflächen 5.0 unmittelbar an den Spulenlängs- bzw. Spulenstirnseiten wk1, wk2 anliegen und zwischen ihren Stütsflächen 5.0 mit Aussparungen zur Bildung der Wickelkopf-Kühlkanäle gk2, gk3 versehen sind. Diese Wickelkopf- Kühlkanäle sind auf beiden Seiten der Füllstücke 5.1, 5.2 vorgesehen, was dadurch zum Ausdruck gebracht wird, daß auf der (sichtbaren) Hüllstückseite die Gasströmungspfeile f2, f3 ausgezogen und auf der dem Betrachter abgewandten Seite der Füllstücke 5.1, 5.2 die Gasströmungslinien f2', f3' gestrichelt dargestellt sind.

Wie man erkennt, verlaufen die Wickelkopf-Kühlkanäle gk2, gk3 meander- oder wellenförmig mit sich ändernder radialer Höhe und in axialer bzw. peripherer Hauptrichtung an den axial verlaufenden Spulenlängsseiten bzw. an den peripher verlaufenden Spulenstirnseiten wk1 bzw. wk2 entlang, bis hin zu Wickelkopfkühlgas-Auslaßkanälen gk4 bzw. ZK.

Die letztgenannten Wickelkopfkühlgas-Auslaßkanäle ZK wurden bereits erwähnt. Man sieht, daß die Wickelkopf-Kühlkanäle gk2 an ihren Enden unmittelbar in die axial verlaufenden Kanalabschnitte zk1 der Auslaßkanäle ZK münden. Damit wird das Temperaturgefälle, welches das Kühlgas nach Verlassen des Wickelkopfbereiches w im Vergleich zur Temperatur des Ballenbereiches b noch hat, zu dessen Kühlung ausgenutzt, bevor das kühlgas über die radialen Abzweigkanäle zk2 in den Luftspaltraum LS übertritt.

Eine zweite Gruppe von Wickelkopfkühlgas-Auslaßkanälen kommuniziert mit den Wickelkopf-Kühlkanälen gk3 der peripheren Hauptrichtung und wird gebildet durch:

Etwas in Wickelkopf-Mitte wk0 angeordnete Auslaßöffnungen 3 im Isolierstoffzylinder; einen sich daran anschließenden zwischen Wickelkopf-Innenumfang und Wellenzapfen r1 angeordneten, mittels Radialwänden 4 abgeschotteten und sich axial erstreckenden Auslaßkanalabschnitt gk4 (wurde bereits erwähnt) und am ballenseitigen Ende (siehe Ballenanfang b0) des Auslaßkanalabschnittes gk4 im Polendbereich vorgesehene Auslaßmündungen 6, deren ungefähre Lage gestrichelt angedeutet ist. Von diesen Auslaßmündungen 6 des Auslaßkanalabschnittes gk4, welche durch entsprechende Öffnungen im Isolierstoff-Zylinder 1 gebildet werden, strömen die Kühlgasteilmengen gemäß Pfeilen f4 etwa radial in den Luftspalt ab.

Weitere Wickelkopfkühlgas-Auslaßkanäle können zusätzlich dazu oder anstelle dessen gebildet sein durch Auslaßquerschnitte im Bereich des Kappenendes und Einsatzringes durch entsprechende Auslaßquerschnitte zwischen Einsatzring (nicht dargestellt) mit Wellenzapfen, über welche dann die Kühlgas-Teilmengen von den Auslaßkanalabschnitten gk4 zum Ständerwickelkopfraum strömen können.

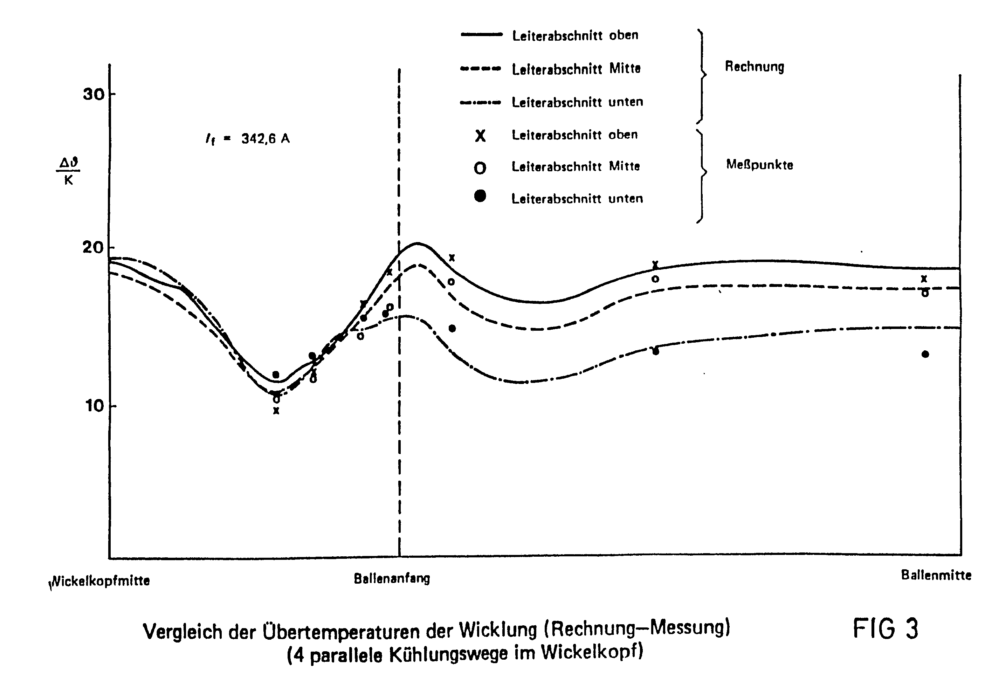

Mit Hilfe der beschriebenen Einrichtung nach der Erfindung ist es gelungen, wie es durch Fig. 3 verdeutlicht wird, die Übertemperaturen des Wikkelkopfes auf des niedrigere Niveau der Übertemperaturen des aktiven Teiles zu senken. Damit ist eine höhere Ausnutzung des Rotors ohne Schwierigkeiten möglich. Ebenso kann auf Grund dieser intensivierten Kühlung bei entsprechender Gestaltung des Ständers die Leistung des Turbogenerators bzw. der dynamoelektrischen Machine gesteigert werden.

## Patentansprüche

1. Einrichtung zur forcierten Gaskühlung der Rotorwicklungen (w) dynamoelektrischer Maschinen, insbesondere von Turbogeneratoren, in ihrem Wickelkopfbereich, mit im Ringspalt zwischen dem Innenumfang des Wickelkopfes (wk) und dem Außenumfang (r11) des Rotorwellenzapfens (r1) in axialer Hauptrichtung zum Rotorballen hin verlaufenden Kühlgaskanälen (gk1),

—die zum einen in Nutengrundkanäle (n2) des Ballens münden, von denen das Kühlgas radial—gegebenenfalls schräg-auswarts durch Kühlgasbohrungen (t1) der in die Nuten des Ballens eingelegten Rotorwicklungen unter direkter Kühlung letzterer strömt sowie daran anschließend durch radiale Ausläßöffnungen (k2) der Nutenverschlußkeile (K) in den Luftspalt übertritt,

—und von denen zum anderen Wickelkopf-Kühlkanäle (gk2, gk3) abzweigen, durch welche die abgezweigten Kühlgasteilmengen an den Spulenseiten des Wickelkopfes entlangführbare sind, gekennzeichnet durch die folgenden Merkmale:

a) der Wickelkopf (WK) ist an seinem Innenumfang zum Strömungsraum der Kühlgaskanäle hin durch einen Isolierstoff-Zylinder (1) abgedeckt;

b) der Isolierstoff-Zylinder weist im Bereich des Überganges von den axial verlaufenden Spulenlängsseiten (wk1) zu den peripher verlaufenden Spulenstirnseiten (wk2) des Wickelkopfes (Biegungsbereich B) jeweils Kühlgas-Eintrittsöffnungen (2) auf;

c) diese Eintrittsöffnungen (2) kommunizieren mit Wickelkopf-Kühlkanälen (gk2) sowohl von Tangentialspalt-Räumen (sp2) zwischen den einander benachbarten axial verlaufenden Spulenlängsseiten (wk1) als auch von Axialspalt-Räumen (sp3) zwischen den einander benachbarten peripher verlaufenden Spulenstirnseiten (wk2);

d) unter Freilaussung von Wickelkopf-Kühlkanälen (gk2, gk3) sind in die Tangentialspalt-Räume (sp2) und in die Axialspalt-Räume (sp3) Tangentialspalt- und Axialspalt-Füllstücke (5.1, 5.2) eingefügt, welche beidseits it Stützflächen (5.0) unmittelbar an den Spulenlängs- bzw. Spulenstirnseiten (wk1, wk2) anliegen und zwischen ihren Stütsflächen (5.0) mit Aussparungen unter Bildung der Wickelkopf- Kühlkanäle (gk2, gk3) versehen sind.

e) die Wickelkopf-Kühlkanäle (gk2, gk3 verlaufen mäander- oder wellenförmig mit sich ändernder radialer Höhe und in axialer bzw. peripherer Hauptrichtung an den axial verlaufenden Spulenlängsseiten bzw. peripher verlaufenden Spulenstirnseiten (wk1 bzw. wk2) entlang bis hin zu Wickelkopfkühlgas-Auslaßkanälen (gk4 bzw ZK).

2. Einrichtung nach Anspruch 1, dadurch gekennzeichnet, daß erste Wickelkopf-Kühlgas-Auslaßkanäle (ZK) vorgesehen sind, welche mit den Wickelkopf-Kühlkanälen (gk2) der axialen Hauptrichtung kommunizieren und durch axiale Zahnkanäle (zk1) des Ballenbereiches und durch von diesen Zahnkanälen abzweigende radial—gegebenenfalls schräg—auswärts gerichtet verlaufende und in den Luftspalt mündende Zahnabzweigkanäle (zk2) gebildet sind.

3. Einrichtung nach Anspruch 1 oder 2, dadurch gekennzeichnet, daß zweite Wickelkopfkühlgas-Auslaßkanäle (3, gk4, 6) vorgesehen sind, welche mit den Wickelkopf-Kühlkanälen (gk3) der peripheren Hauptrichtung kommunizieren und gebildet sind durch:

—etwa in Wickelkopf-Mitte angeordnete Auslaßöffnungen (3) im Isolierstoff-Zylinder (1),

—einen sich daran anschließenden, zwischen Wickelkopf-Innenumfang und Wellenzapfen (r1) angeordneten, mittels Radialwänden (4) abgeschotteten und sich axial erstreckenden Auslaßkanalabschnitt und

—am ballenseitigen Ende des Auslaßkanalabschnittes (gk4) im Polendbereich vorgesehene Auslaßmündungen (6), von denen die Kühlgasteilmengen etwa radial in den Luftspalt abströmen und/oder im Bereich des Kappanendes und Einsatzringes vorgesehene Auslaßquerschnitte zwischen Einsatzring und Wellenzapfen, über welche die Kühlgas-Teilmengen von den Auslaßkanalabschnitten zum Ständerwickelkopfraum strömen.

## Revendications

1. Dispositif pouc réaliser le refroidissement forcé par gaz des enroulements (W) du rotor de machines dynamo-électriques, notamment de turboalternateurs, dans la zone de leur tête du bobinage, comportant des canaux (gk1) qui véhiculent un gaz de refroidissement et s'étendent dans la fente annulaire présente entre le pourtour intérieure de la tête (WK) du bobinage et le pourtour extérieur (r11) de l'embout (r1) de l'arbre du rotor dans la direction axiale principale, en direction du corps du rotor, et qui

—d'une part débouchent dans les canaux de fond d'encoche (n2) du corps, à partir desquels le gaz de refroidissement circule radialement -éventuellement obliquement- vers l'extérieur en passant dans des perçages (t1) de circulation du gaz de refroidissement des enroulements du rotor, insérés dans les encoches du corps du rotor, tout en refroidissant directement ces enroulements, puis sort dans l'entrefer par des ouvertures radiales de sortie (k2) des coins de fermeture (K) des encoches, et

—à partir desquels s'étendent par ailleurs en dérivation, des canaux de refroidissement (gk2, gk3) de la tête du bobinage, au moyen desquels les quantités dérivées de gaz de refroidissement peuvent être envoyées le long des côtés de la bobine de la tête du bobinage, caractérisé par les caractéristiques suivantes:

a) la tête (WK) du bobinage est recouverte, au niveau de son pourtour intérieur, en direction de l'espace d'écoulement des canaux véhiculant le gaz de refroidissement, par un cylindre en matériau isolant (1);

b) le cylindre en matériau isolant possède respectivement des ouvertures (2) d'entrée du gaz de refroidissement, dans la zone de la jonction entre les côtés longitudinaux axiaux (wk1) de la bobine et les faces frontales périphériques (wk2) de la bobine de la tête du bobinage (zone de pliage B);

c) ces ouvertures d'entrée (2) communiquent avec des canaux (gk2) de refroidissement de la tête du bobinage provenant aussi bien d'espaces en forme de fentes tangentielles (sp2) entre les côtés longitudinaux axiaux (wk1) de la bobine, qui sont voisins les uns des autres, qu'à partir d'espaces en forme de fentes axiales (sp3) présents entre les faces frontales périphériques (wk2) de la bobine, voisine entre elles;

d) des éléments (5.1, 5.2) de remplissage des fentes tangentielles et des fentes axiales, qui s'appliquent, des deux côtés, au moyen de faces d'appui (5.0), directement contre les côtés longitudinaux ou les faces frontales (wk1, wk2) de la bobine et comportent, entre leurs surfaces d'appui (5.0), des évidements délimitant des canaux (gk2, gk3) des refroidissement de la tête du bobinage;

e) les canaux (gk2, gk3) de refroidissement de la tête du bobinage s'étendent avec une forme sinueuse on ondulée et avec une hauteur radiale variable et dans une direction principale axiale ou périphérique, sur les côtés longitudinaux axiaux ou sur les faces frontales périphériques (wk1 ou wk2) de la bobine jusqu'aux canaux (gk4 ou ZK) de sortie du gaz de refroidissement de la tête de bobinage.

2. Dispositif suivant la revendication 1, caractérisé par le fait qu'il est prévu des premiers canaux (ZK) de sortie du gaz de refroidissement de la tête du bobinage, qui communiquent avec les canaux (gk2) de refroidissement de la tête du bobinage de la direction principale axiale et sont formés par des canaux axiaux (zk1) de dents de la zone du corps et par des canaux de dérivation (zk2) de dents qui s'étendent à partir desdits canaux de dents, se dirigent radialement-éventuellement obliquement- vers l'extérieur et débouchent dans l'entrefer.

3. Dispositif suivant la revendication 1 ou 2, caractérisé par le fait qu'il est prévu des seconds canaux (3, gk4, 6) de sortie du gaz de refroidissement de la tête du bobinage, qui communiquent avec les canaux de refroidissement (gk3) de la tête du bobinage, dans la direction périphérique principale et sont formés par:

—des ouvertures de sortie (3) disposées approximativement au centre de la tête du bobinage, dans le cylindre en matériau isolant (1),

—une section axiale des canaux de sortie, qui se raccorde à ces ouvertures de sortie, est disposée entre le pourtour intérieur de la tête du bobinage et l'embout (r1) de l'arbre et est délimité par des parois radiales (4), et

—des embouchures de sortie (6), qui sont prévues dans la zone d'extrémité des pôles, sur l'extrémité, du côté du corps, de la section de canal de sortie (gk4) et à partir desquelles les quantités partielles de gaz de refroidissement circulent approximativement radialement pour pénétrer dans l'entrefer, et/ou des sections transversales de sortie prévues dans la zone de l'extrémité du chapeau et de la bague d'insertion, entre cette dernière et l'embout de l'arbre et par l'intermédiaire desquelles les quantités partielles du gaz de refroidissement circulent depuis les sections des canaux de sortie en direction de l'espace de la tête de l'enroulement statorique.

## Claims

1. Devices for the forced gas cooling of the rotor winding (W) of dynamoelectric machines, in particular of turbogenerators, in their winding head area, having, in the annular gap between the inner periphery of the winding head (WK) and the outer periphery (r11) of the rotor shaft journal (r1), cooling gas channels (gk1) which extend in the main axial direction towards the rotor body,

—which channels, on the one hand, open into slot base channels (n2) of the body, from which the cooling gas flows radially—possibly obliquely—outwards through cooling gas bores (t1) of the rotor windings introduced into the slots of the body, with direct cooling of these rotor windings, and then crosses into the air gap through radial outlet apertures (k2) of the slot sealing wedges (K),

—and from which, on the other hand, winding head cooling channels (gk2, gk3) branch off, through which the branched-off cooling gas portions can be guided along the coil sides of the winding head, characterised by the following features:

a) the winding head (WK) is screened by an insulating material cylinder (1) on its inner periphery towards the flow chamber of the cooling gas channels;

b) the insulating material cylinder has cooling gas inlet apertures (2) in the transition region from the axially extending longitudinal coil sides (wk1) to the circumferentially extending front coil sides (wk2) of the winding head (bending region B);

c) these inlet apertures (2) communicate with winding head cooling channels (gk2) both of tangential gap chambers (sp2) between the adjacent axially extending longitudinal coil sides (wk1) and of axial gap chambers (sp3) between the adjacent circumferentially extending front coil sides (wk2);

d) leaving winding head cooling channels (gk2, gk3) free there are inserted into the tangential gap chambers (sp2) and into the axial gap chambers (sp3) tangential-gap- and axial-gap-filling pieces (5.1, 5.2) which abut directly on both sides with support surfaces (5.0) against the longitudinal coil sides and the front coil sides (wk1, wk2) and are provided with recesses between their support surfaces (5.0), thus forming the winding head cooling channels (gk2, gk3);

e) the winding head cooling channels (gk2, gk3) extend in meander- or wave-like manner with changing radial height and in the main axial and circumferential directions along the axially extending longitudinal coil sides and circumferentially extending front coil sides (wk1 and wk2) to winding head cooling gas outlet channels (gk4 and ZK) respectively.

2. Device according to claim 1, characterised in that first winding head cooling gas outlet channels (ZK) are provided which communicate with the winding head cooling channels (gk2) of the main axial direction and are formed by axial tooth channels (zk1) of the body region and by tooth branch channels (zk2) branching radially off from these tooth channels—possibly obliquely——extending outwards and opening into the air gap.

3. Device according to claim 1 or 2, characterised in that second winding head cooling gas outlet channels (3, gk4, 6) are provided which communicate with the winding head cooling channels (gk3) of the main circumferential direction and are formed by:

—outlet apertures (3) in the insulating material cylinder (1) arranged approximately in the centre of the winding head,

—an outlet channel section connected to these apertures and arranged between the winding head inner periphery and the shaft journal (r1), partitioned by means of radial walls (4) and extending axially and

—outlet apertures (6) provided in the pole end region at the body side end of the outlet channel section (gk4), from which apertures the cooling gas portions flow approximately radially into the air gap and/or outlet cross-sections provided in the region of the cap end and insert ring between the insert ring and the shaft journals, via which the cooling gas partial portions flow from the outlet channel sections to the stator winding head chamber.

FIG 1

FIG 2

**Leiterabschnitt oben**  
**- - - - Leiterabschnitt Mitte** } **Rechnung**  
**- · - · - Leiterabschnitt unten**

**X**    Leiterabschnitt oben  
**O**    Leiterabschnitt Mitte } **Meßpunkte**  
**●**    Leiterabschnitt unten

$I_f = 342,6 \ A$

$\dfrac{\Delta\vartheta}{K}$

30

20

10

Wickelkopfmitte        Ballenanfang        Ballenmitte

Vergleich der Übertemperaturen der Wicklung (Rechnung–Messung)  
(4 parallele Kühlungswege im Wickelkopf)

**FIG 3**

EP 0 160 887 B1